# EUROPÄISCHE PATENTSCHRIFT

(11) **EP 3 529 115 B1**
(45) Veröffentlichungstag und Bekanntmachung des Hinweises auf die Patenterteilung: **03.03.2021**
(21) Anmeldenummer: 17780650.2
(22) Anmeldetag: 20.09.2017
(51) Int. Cl.: B60T 8/36

(54) **MAGNETVENTIL ZUR STEUERUNG DES BREMSDRUCKS EINER RADBREMSE**
SOLENOID VALVE FOR CONTROLLING BRAKES PRESSURE
VALVE A AIMANT POUR CONTÔLER LA PRESSION D'UN FREIN

(30) Priorität: 18.10.2016 DE 102016220335
(43) Veröffentlichungstag der Anmeldung: 28.08.2019
(73) Patentinhaber: Robert Bosch GmbH, 70442 Stuttgart (DE)
(72) Erfinder: ERTLE, Marcus, 87509 Immenstadt (DE); STEINGASS, Stephan, Suzhou 215021 (CN); BODMANN, Carsten, 71634 Ludwigsburg (DE); BARTOSCH, Hans-Peter, 87561 Oberstdorf (DE); KNACKERT, Stephan, 87490 Haldenwang (DE); MUELLER, Philipp, 87493 Lauben-Heising (DE)
(86) Internationale Anmeldenummer: PCT/EP2017/073830
(87) Internationale Veröffentlichungsnummer: WO 2018/072959

(56) Entgegenhaltungen:
- EP-A1- 1 108 515
- WO-A1-01/36242
- WO-A1-2015/001789
- DE-A1- 19 611 832
- DE-A1-102006 003 857
- DE-A1-102007 053 134

## Beschreibung

Die vorliegende Erfindung betrifft ein Magnetventil zur Steuerung des Bremsdrucks einer Radbremse einer schlupfregelbaren Hydraulikbremsanlage eines Kraftfahrzeugs, mit einem längsbeweglich zumindest teilweise in einem Ventileinsatz angeordneten und mit einem Ventilsitz zusammenwirkenden Ventilelement, das in Einbaulage von einer Federeinrichtung mit einer in Öffnungsrichtung bzgl. des Ventilsitzes wirkenden Kraftkomponente beaufschlagt wird und mittels eines elektromagnetischen Aktuator in Schließrichtung bzgl. des Ventilsitzes betätigbar ist, wobei das Ventilelement zwischen einem Anker und dem Ventilsitz angeordnet ist und an dem Ventilelement eine Kontaktfläche ausgebildet ist, an welcher das Ventilelement mit dem Anker in Wirkverbindung steht, dadurch gekennzeichnet, dass die Kontaktfläche derart ausgebildet ist, dass zwischen einer Mittelachse des Ventilelements und der Kontaktfläche ein nicht-rechtwinkliger Schnittwinkel besteht.

### Stand der Technik

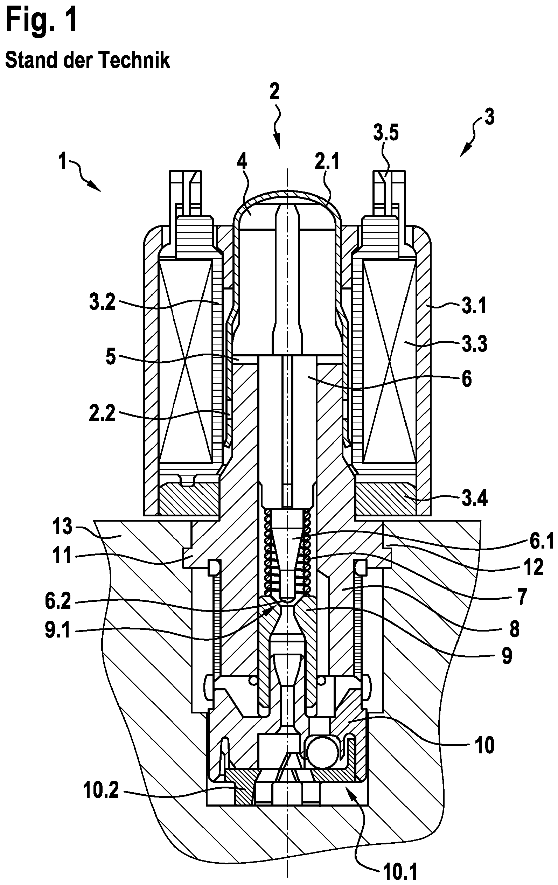

Aus dem Stand der Technik ist beispielsweise die Patentanmeldung DE 10 2007 053 134 A1 bekannt. Diese Schrift betrifft ein Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird. Ein solches ist in Figur 1 dargestellt. Wie aus Figur 1 ersichtlich ist, umfasst das Magnetventil 1, das beispielsweise als stromlos offenes Regelventil ausgeführt ist, eine Magnetbaugruppe 3 zur Erzeugung eines Magnetflusses, die einen Gehäusemantel 3.1, einen Wicklungsträger 3.2, eine Spulenwicklung 3.3 und eine Abdeckscheibe 3.4 umfasst, und eine Ventilpatrone 2, die eine Kapsel 2.1, einen mit einem ersten Ende in die Kapsel 2.1 eingeschobenen Ventileinsatz 8, einen Magnetanker 4 mit einem Ventilelement 6 (auch Stößel genannt) und eine Rückstellfeder 7 umfasst. Bei der Herstellung des Magnetventils 1 werden die Kapsel 2.1 und der Ventileinsatz 8 der Ventilpatrone 2 durch Pressen aufeinander gefügt und durch eine Dichtschweißung 2.2 wird die Ventilpatrone 2 hydraulisch gegenüber der Atmosphäre abgedichtet. Zusätzlich nimmt der Ventileinsatz 8 die im hydraulischen System auftretenden Druckkräfte auf und leitet diese über einen Verstemmflansch 11 an einen Verstemmbereich 12 eines Fluidblocks 13 weiter.

Die Magnetbaugruppe 3 erzeugt durch eine Bestromung der Spulenwicklung 3.3 über elektrischen Anschlüsse 3.5 eine Magnetkraft, die den längsbeweglichen Magnetanker 4 mit dem Ventilelement 6, der ein Schließelement 6.1 mit einem Hauptdichtelement 6.2 umfasst, entgegen der Kraft der Rückstellfeder 7 gegen den Ventileinsatz 8 bewegt, wobei das Ventilelement 6 und die Rückstellfeder 7 in einer Innenbohrung des Ventileinsatzes 2 geführt sind. Der Ventileinsatz 8 leitet den von der Magnetbaugruppe 3 über die Abdeckscheibe 3.4 eingeleiteten Magnetfluss axial über einen Luftspalt 5 in Richtung Magnetanker 4. Zudem nimmt der Ventileinsatz 8 an einem zweiten Ende den so genannten Ventilkörper 9 auf, der einen Hauptventilsitz 9.1 umfasst, in welchen das als Dichtkalotte ausgeführte Hauptdichtelement 6.2 dichtend eintaucht, um die Dichtfunktion des Magnetventils 1 umzusetzen. Wie weiter aus Figur 1 ersichtlich ist, wird an den Ventileinsatz 8 axial ein Ventilunterteil 10 angelegt und abgestützt, das ein exzentrisch zur Ventilhauptachse angeordnetes Rückschlagventil 10.1 umfasst. Das beispielsweise als Kunststoffeinsatz ausgeführte Ventilunterteil 10 dient zusätzlich zur Abdichtung zum umgebenden Fluidblock 13, zur Abdichtung zum Ventilkörper 9 und zur Aufnahme eines Flachfilters 10.2.

Weiterhin ist aus dem Stand der Technik die Patentanmeldung DE 10 2004 030 428 A1 bekannt. Diese Schrift betrifft eine elektromagnetische Ventilvorrichtung. Wenigstens ein Teil des Ventilelementes ist in einem von dem Ventileinsatz im Bereich des Ventilsitzes begrenzten Ventilraum angeordnet. Des Weiteren steht ein dem Ventilraum abgewandtes Ende des Ventilelementes mit einem Anker in Wirkverbindung. Hierbei ist eine dem Ventileinsatz zugewandte Stirnseite des Ankers und/oder eine der Stirnseiten des Ankers zugewandte Stirnseite des Ventileinsatzes mit einem derartigen Oberflächenprofil ausgeführt, dass ein von den Stirnseiten begrenzter Strömungsquerschnitt in radialer Richtung und/oder in Umfangsrichtung des Ankers wenigstens bereichsweise variiert.

Im Allgemeinen werden die Bauteile Ventilelement (Stößel) und Anker ungeführt (d.h. mit allen Freiheitsgraden) in das Ventil verbaut. Zudem sind die Bauteile zu einander lose montiert und können somit unterschiedlichste Orientierungen aufweisen. Teilweise weist das Ventilelement dabei eine etwas stärkere Führung durch das eingestellte Spiel auf als der Anker. Beim Anker handelt es sich häufig um ein kaltumgeformtes Stahlbauteil. Bei dem Ventilelement handelt es sich hingegen um ein Spritzgussteil, das aus faserverstärktem Kunststoff gefertigt wird. Die Herstellung erfolgt häufig mit seitlichem Anspritzpunkt. Bei der Herstellung des Ventilelements tritt aufgrund von Asymmetrien in der Faserorientierung ein Verzug im Bauteil auf. Dies führt dazu, dass auch die Anlagefläche am hinteren (dem Anker zugewandten) Ende des Ventilelements eine gewisse Schiefheit aufweist. Die resultierende Bauteilungenauigkeit (vor allem an Anker, Ventilelement) beeinflusst die Druckstellgenauigkeit sehr stark.

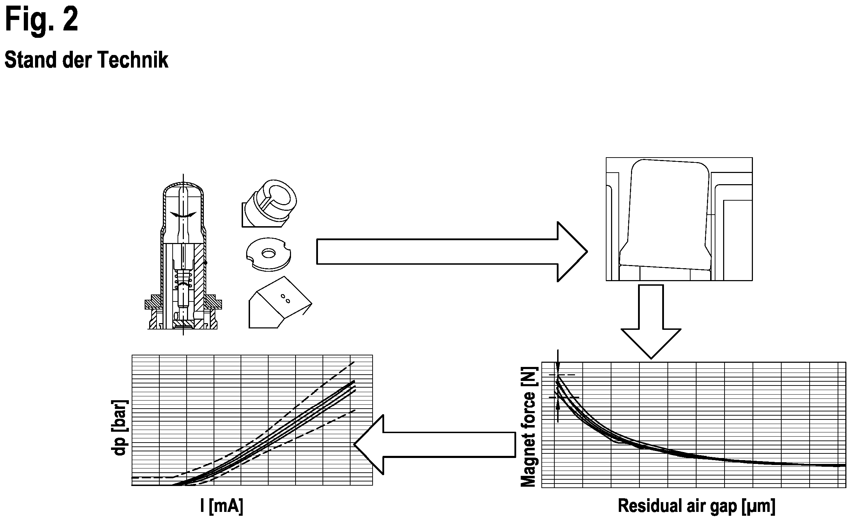

Zudem können unterschiedliche Bauteilorientierungen zwischen Anker und Stößel auftreten und es dadurch zu Schwankungen bei der Druckstellung kommen (wie in Fig. 2 dargestellt), weil sich eine Vielzahl unterschiedlicher Konstellationen zwischen Anker und Stößel einstellen kann und sich somit unterschiedliche Magnetkräfte ergeben. Bspw. kommt es durch eine Neuorientierung (Drehung) der Bauteile zu einer Änderung der Kontaktstellen.

### Offenbarung der Erfindung

Vorteilhaft ermöglicht hingegen das erfindungsgemäße Magnetventil eine Verbesserung der Druckstellgenauigkeit des Einlassventils sowie eine Vermeidung undefiniert wechselnder Magnetkräfte. Ermöglicht wird dies gemäß der Erfindung durch die Merkmale des unabhängigen Patentanspruchs. Weiterbildungen der Erfindung sind in den abhängigen Patentansprüchen angegeben.

Das erfindungsgemäße Magnetventil zur Steuerung des Bremsdrucks einer Radbremse einer schlupfregelbaren Hydraulikbremsanlage eines Kraftfahrzeugs, mit einem längsbeweglich zumindest teilweise in einem Ventileinsatz angeordneten und mit einem Ventilsitz zusammenwirkenden Ventilelement, das in Einbaulage von einer Federeinrichtung mit einer in Öffnungsrichtung bezüglich des Ventilsitzes wirkenden Kraftkomponente beaufschlagt wird und mittels eines elektromagnetischen Aktuator in Schließrichtung bezüglich des Ventilsitzes betätigbar ist, wobei das Ventilelementes zwischen einem Anker und dem Ventilsitz angeordnet ist und an dem Ventilelement eine Kontaktfläche ausgebildet ist, an welcher das Ventilelement mit dem Anker in Wirkverbindung steht, dadurch gekennzeichnet, dass die Kontaktfläche derart ausgebildet ist, dass zwischen einer Mittelachse des Ventilelements und der Kontaktfläche ein nicht-rechtwinkliger Schnittwinkel besteht.

Als Mittelachse des Ventilelements wird eine virtuelle Achse verstanden, die durch die geometrische Mitte des Querschnitts des Ventilelements verläuft. Die Mittelachse ist dabei parallel zur Umfangsfläche des Ventilelements. Die Mittelachse verläuft von dem Hauptdichtelement bis zu der dem Anker zugewandten Stirnseite. Sie folgt dabei einer evtl. Krümmung des Ventilelements. Als Kontaktfläche wird weiterhin eine virtuelle Fläche verstanden, die das Ventilelement begrenzt und dabei eine Berührungsfläche zum Anker darstellt, wenn beide Komponenten in Einbaulage in Kontakt miteinander stehen. Sie ist mittels einzelner Anlagepunkte oder auch Anlageflächen definiert. Die Kontaktfläche kann auch aus mehreren Kontaktpunkten oder mehreren Teilkontaktflächen bestehen. Die Kontaktfläche ist im Allgemeinen eben, das heißt zweidimensional. Als Kontaktfläche ist daher eine schiefe virtuelle Ebene an dem Ende des Ventilelements, welches dem Anker zugewandt ist, zu verstehen, wobei sich daran Kontaktstellen befinden, die eine Anlagesituation zwischen dem Ventilelement und dem Anker definieren. Als Schnittwinkel wird der kleinste Winkel verstanden, den die Mittelachse mit der Kontaktfläche bildet. Erfindungsgemäß ist nun vorgesehen dass die sich ergebende Kontaktfläche des Ventilelements einen vom rechten Winkel (d.h. 90°) abweichenden Winkel zur Mittelachse des Ventilelements in Höhe der Stirnfläche aufweist.

Erfindungsgemäß ist das Ventilelement spritzgegossen und insbesondere faserverstärkt. Hierdurch kommt es, wie bereits ausgeführt, zu einem Verzug des Ventilelements. Bei einer Führung des Ventilelements im Ventileinsatz, würde sich daraus eine - in Bezug auf die Bewegungsrichtung des Ventilelements - schräge Stirnfläche des Ventilelements ausbilden. Aufgrund der losen Führung würde sich der Anker entsprechend dieser schrägen Stirnfläche des Ventilelements ausrichten. Dies würde bei einer Bewegung zu einem Verkippen des Ankers führen. Hieraus ergibt sich eine Variation der Magnetkraft und damit Variation der Druckstellgenauigkeit. Die Kompensation des fertigungsbedingten Verzugs des Bauteils ermöglicht somit eine verbesserte Druckstellgenauigkeit.

Hierbei sei darauf verwiesen, dass nicht der Verzug des Bauteils direkt kompensiert wird, sondern die Auswirkungen des Verzugs des Ventilelements (Stößel) auf die Auflagefläche für den Anker werden kompensiert durch eine entsprechende geänderte Gestaltung der Stirnfläche, bzw. Kontaktfläche, welche die Auflagefläche für den Anker darstellt. Es wird im Grunde genommen in Bezug auf den Strößel eine schiefe Stirnfläche erstellt. Diese "schiefe" Ebene kompensiert die Verzüge (vor allem der Stößelspitze) beim Spritzen und erzeugen so einen möglichst gerade Stößel (bezogen auf die Funktionsrelevante Spitze).

Hierfür wird der zu erwartende Verzug ermittelt, bspw. mittels Simulation oder Messung. Im Anschluss erfolgt eine Anpassung des Designs des Ventilelements, um den zu erwartenden Verzug zu berücksichtigen. Hierbei wird bspw. eine schiefe Kontaktfläche am hinteren Ende des Ventilelements geschaffen, um eine nicht-rechtwinklige Beziehung zwischen Mittelachse und Kontaktfläche auszubilden. Die schiefe Kontaktfläche kann mittels definierter Kontaktpunkte unterschiedlicher Höhe erzeugt werden. Hierbei können bspw. eine schiefe Stirnfläche oder Vorsprünge an der Stirnfläche vorgesehen sein. Die Anpassung und Ausbildung der Kontaktfläche erfolgt daher durch Auslegung der Endpunkte der Stirnfläche.

Weiterhin erfolgt vorteilhaft eine klare Definition der Kontaktpunkte der Kontaktfläche. Hierdurch erfolgt eine Vermeidung von unterschiedlichen Kontaktsituationen zwischen Ventilelement und Anker. Dies verringert die Magnetkraftstreuung. Weiterhin reduziert dies die Variation des Ankerverkippens.

In einer vorteilhaften Ausführungsform ist das Magnetventil dadurch gekennzeichnet, dass an der Stirnseite des Ventilelements wenigstens ein Vorsprung, insbesondere mehrere Vorsprünge, ausgebildet ist, welcher die Kontaktfläche definiert.

Hierunter wird verstanden, dass die Stirnseite eine Erhebung (bspw. eine stufenförmige Erhebung) aufweist, mittels welcher die angesprochene (in Bezug auf das Ventilelement) schiefe Kontaktfläche ausgebildet wird. Alternativ sind mehrere Vorsprünge vorgesehen, d.h. wenigstens zwei, oder bspw. drei oder vier oder fünf Kontaktstellen. Die Vorsprünge werden auch als Pads (oder Kontaktpads) bezeichnet. Die Vorsprünge definieren die Kontaktpunkte zum Anker. Die verbleibende Fläche der Stirnfläche steht auch bei einem aneinander Anliegen nicht in Kontakt mit dem Anker. Die Stirnfläche des Ventilelements kann alternativ auch ein sonstiges Profil aufweisen, welches die schräge Kontaktfläche definiert und ausbildet. Auch kann eine schräge Stirnfläche selbst aufgrund der hervorgehobenen Fläche auf einer Seite als Vorsprung verstanden werden.

Vorteilhaft ist hierbei die einfache Umsetzung zur Ausbildung der Kontaktfläche, welche nicht rechtwinklig hinsichtlich der Mittelachse des Ventilelements ist. Die Positionierung von Vorsprüngen an der Stirnseite ist mit einem geringen Fertigungsaufwand verbunden. Bspw. kann eine Anpassung des Werkzeugs (z.B. mittels einem Einstich) erfolgen, um die Vorsprünge im Spritzgussverfahren auszubilden. Weiterhin erfolgt bei mehreren Vorsprüngen eine gleichmäßige Verteilung der Krafteinleitung.

In einer möglichen Ausgestaltung ist das Magnetventil dadurch gekennzeichnet, dass mehrere Vorsprünge ausgebildet sind, wobei diese:
- radial im selben Abstand zur Mittelachse des Ventilelements positioniert sind; und/oder
- auf der Stirnseite des Ventilelements zirkumferentiell voneinander beabstandet positioniert sind; und/oder
- symmetrisch verteilt zur Mittelachse auf der Stirnseite des Ventilelements positioniert sind; und/oder
- am äußeren Rand der Stirnseite des Ventilelements positioniert sind.

Vorteilhaft ergibt sich hierdurch insbesondere eine Reduzierung oder sogar Vermeidung des Verkippens des Ankers. Weiterhin kann dadurch eine eindeutige Kontaktsituation zwischen dem Ventilelement und dem Anker ermöglicht werden. Darüber hinaus führen diese Ausgestaltungen zu einem gleichmäßigen Kraftfluss zwischen den Komponenten.

In einer bevorzugten Ausführung ist das Magnetventil dadurch gekennzeichnet, dass die Kontaktfläche einen definierten Winkel zu der Mittelachse des Ventilelements aufweist.

Hierunter wird verstanden, dass die durch das Ende des Ventilelements gebildete Anlagefläche für den Anker einen definierten nicht-rechtwinkligen Winkel aufweist. Eine Abweichung liegt in vorteilhafter Weise in der Größenordnung von 1°. Bspw. wurde eine Abweichung von 0,33° als vorteilhaft ermittelt. D.h. der Winkel zwischen der Mittelachse und der Kontaktfläche beträgt an minimaler Stelle 89,67°. Alternativ können Abweichungen von wenigen Grad, bspw. 5 bis 25° vorliegen. Vorteilhaft kann durch das Vorsehen eines definierten nicht-orthogonalen Winkels eine akkurate Einstellung der Kontaktfläche erfolgen. Dies ermöglicht eine genauere Führung des Ankers. Dies wiederum reduziert ein Verkippen des Ankers bei axialer Bewegung durch Schaffung einer Auflagefläche, die senkrecht zur Bewegungsrichtung des Ankers ist.

In einer alternativen Weiterbildung ist das Magnetventil dadurch gekennzeichnet, dass der Winkel so definiert ist, dass die Kontaktfläche eine Bewegung des Ankers in axialer Richtung ohne ein Verkippen des Ankers ermöglicht.

Vorteilhaft erfolgt hierdurch eine Verbesserung der Druckstellgenauigkeit, sowie ermöglicht dies einheitliche Magnetkräfte aufgrund der relativ konstanten Konstellation (und Anlagesituation) zwischen Anker und Ventilelement In einer vorteilhaften Ausgestaltung ist das Magnetventil dadurch gekennzeichnet, dass der Winkel so definiert ist, dass ein durch einen Produktionsprozess verursachter Verzug des Ventilelements durch den Winkel kompensiert wird.

Unter dem Produktionsprozess wird erfindungsgemäß der Spritzguss vorzugsweise mit faserverstärktem Kunststoff verstanden. Bezüglich des Begriffs Kompensierung wird auf die obigen Ausführungen verwiesen. Vorteilhaft wird hierdurch eine geeignete Auflagefläche für den Anker geschaffen, um ein Verkippen dessen zu verhindern. Hierzu erfolgt eine Ausnutzung des reproduzierbaren Effekts des Verzugs bei bspw. faserverstärkten Kunststoffspritzgussteilen mit seitlicher Einspritzung in Abhängigkeit von der Faserorientierung. Eine Kompensation für die produzierten Bauteile wird somit ermöglicht.

In einer möglichen Ausführung ist das Magnetventil dadurch gekennzeichnet, dass der Winkel so definiert ist, dass in Einbaulage des Ventilelements die Kontaktfläche orthogonal zu einer Bewegungsrichtung des Ventilelements ist; und/oder orthogonal zu einer Mittelachse des Magnetventils ist.

Unter Einbaulage des Ventilelements wird das in dem Magnetventil eingebaute Ventilelement verstanden. Die Bewegungsrichtung des Ventilelements verläuft hierbei in Richtung der Mittelachse des Magnetventils. Ebenfalls verläuft die Bewegungsrichtung des Ankers in Richtung der Mittelachse des Magnetventils, so dass die Definition des Winkels der Kontaktfläche auch in Abhängigkeit der gewünschten Bewegungsrichtung des Ankers erfolgen kann. Vorteilhaft wird hierdurch eine geeignete Führung des Ankers ermöglicht. Dies ermöglicht eine Vermeidung des Verkippens des Ankers bei axialer Bewegung.

In einer bevorzugten Weiterbildung ist das Magnetventil dadurch gekennzeichnet, dass die Höhe des Vorsprungs derart dimensioniert ist, dass hierdurch der definierte Winkel eingestellt wird.

Hierdurch wird verstanden, dass sich die bspw. durch den Verzug einstellende Schräge der regulären Stirnfläche des Ventilelements im eingebauten Zustand mittels des Vorsprungs korrigiert wird. Hierfür werden der Vorsprung (oder die Vorsprünge) entsprechend definiert, insbesondere wird deren Höhe entsprechend ausgestaltet. Wie bereits ausgeführt, erfolgt eine derartige Definition unter Berücksichtigung der zu erwartenden Schrägstellen, bspw. aufgrund von Messwerten, Simulation oder Erfahrungswerten. Bei der Definition der Höhe der Vorsprünge können weiterhin Oberflächenungenauigkeiten berücksichtigt werden. Die Vorsprünge erlauben es also einen Abstand herzustellen und sicherzustellen, dass der Kontakt zwischen dem Ventilelement und dem Anker an den definierten Kontaktstellen auftritt und nicht an nicht definierten Unebenheiten. Vorteilhaft wird hierdurch eine Sicherstellung einer eindeutigen Anlagesituation ermöglicht, sowohl bei regulären Unebenheiten, als auch bei außergewöhnlichen Umständen, bspw. Werkstücken mit bedingtem Fehlermaß

In einer alternativen Ausführungsform ist das Magnetventil dadurch gekennzeichnet, dass an der Stirnseite des Ventilelements wenigstens zwei Vorsprünge mit gleicher Höhe ausgebildet sind.

Hierunter wird verstanden, dass zwei gleich hohe Vorsprünge vorhanden sind. Bspw. können auch bei vier Vorsprüngen 2 gleich hohe höhere Vorsprünge und 2 gleich hohe niedrigere Vorsprünge ausgestaltet sein. Vorteilhaft wird hierdurch die Schaffung definierter Kontaktstellen ermöglicht. Weiterhin erfolgt eine Reduzierung der Variation der Bauteilorientierungen.

In einer vorteilhaften Ausgestaltung ist das Magnetventil dadurch gekennzeichnet, dass an der Stirnseite des Ventilelements wenigstens zwei Vorsprünge mit unterschiedlicher Höhe ausgebildet sind.

Hierunter wird verstanden, dass wenigstens zwei Vorsprünge zur Einstellung der Kontaktfläche vorgesehen sind. Die beiden Vorsprünge weisen dabei zwei unterschiedliche Höhen auf. Hierdurch kann die Kontaktfläche definiert werden. Bspw. kann auch bei vier Vorsprüngen 4 unterschiedlich hohe Vorsprünge definiert und ausgestaltet werden. Bspw. können die 4 Padhöhen (abhängige Lage zum Anspritzpunkt) so definiert sein, dass sie eine Anlagefläche bilden, die zur hinteren Stirnfläche etwa 0,33° schief ist. Vorteilhaft ermöglicht dies die Schaffung einer schiefen Ebene als Kontaktfläche. Die schiefe Kontaktfläche wird dabei mittels einfacher Mittel während des regulären Gießprozesses mit erstellt. Bspw. kann hierfür eine Anpassung des Werkzeugs erfolgen. Hierbei eignen sich bspw. Einstiche, um die Vorsprünge zu erzeugen.

In einer vorteilhaften Ausführungsform ist das Magnetventil dadurch gekennzeichnet, dass an der Stirnseite des Ventilelements drei Vorsprünge oder vier Vorsprünge ausgebildet sind.

Hierunter wird verstanden, dass bspw. exakt drei Vorsprünge an der Stirnseite des Ventilelements definiert sind. Durch die Festlegung auf diese Anzahl kann eine Überbestimmung der Kontaktsituation vermieden werden. Hierdurch wird ein "Kippeln" des Ankers aufgrund der geometrischen Überbestimmung verhindert. In einer alternativen Ausführung sind jedoch auch vier oder 5 Vorsprünge denkbar. In einer alternativen Ausführungsform ist das Magnetventil dadurch gekennzeichnet, dass an jedem Flügel des Ventilelements jeweils ein Vorsprung ausgebildet ist. Hierunter wird verstanden, dass das Ventilelement axiale Aussparungen enthält, die bspw. den Fluidfluss positiv beeinflussen, weiterhin verbleiben zwischen den Aussparungen Flügel des Ventilelements, die eine radiale Führung ermöglichen. Bspw. können vier Flügel vorgesehen sein. Durch eine Positionierung der Kontaktstellen an den Flügeln, kann ein geeigneter Abstand der Kontaktstellen von der Mittelachse eingestellt werden. Vorteilhaft kann hierdurch eine Optimierung der Anlagesituation innerhalb der bestehenden Struktur und Geometrie des Ventilelements ermöglicht werden. Dies ermöglicht die beschriebenen Vorteile (insbesondere Reduzierung/Vermeidung Verkippen des Ankers sowie eindeutige Kontaktsituation) ohne Änderung des prinzipiellen aktuellen Designs des Ventilelements.

In einer möglichen Ausgestaltung ist das Magnetventil dadurch gekennzeichnet, dass die Vorsprünge ebene Flächen aufweisen, wobei die ebenen Flächen insbesondere die Kontaktfläche darstellen, wobei die Kontaktfläche insbesondere einen Winkel zu der Mittelachse des Ventilelements aufweist.

Hierunter wird verstanden, dass die Vorsprünge Flächen aufweisen, welche in Richtung des Ankers weisen. Diese Flächen dienen als Auflage- und Kontaktflächen zu dem Anker bei einem aneinander Anliegen des Ankers und des Ventilelements. Diese Flächen der Vorsprünge berücksichtigen die beschriebene Ausrichtung der Kontaktfläche und setzen diese fort. Vorteilhaft werden hierdurch große Auflagepunkte geschaffen, um eine geeignete Kraftleitung zu ermöglichen. Hierdurch werden punktuelle Kontakte vermieden. Hierdurch wird eine geeignete Flächenpressung ermöglicht.

In einer bevorzugten Ausführung ist das Magnetventil dadurch gekennzeichnet, dass die Stirnseite des Ventilelements ein Profil aufweist, wobei insbesondere die Erhebungen des Profils die Kontaktfläche definieren.

Hierunter wird verstanden, dass mittels eines ausgebildeten Profils auf der dem Anker zugewandten Stirnseite des Ventilelements die beschriebene schiefe Kontaktfläche erzeugt wird. Der Anker steht damit mit den Erhebungen des Profils in Kontakt. Hinsichtlich der Gestaltung des Profils sind beliebige Formen denkbar. Bspw. kann dieses aus Vertiefungen oder Mulden oder Wölbungen bestehen. Als Vorsprung könnten auch der verbleibende Randbereich oder eine hervortretende Wölbung (bspw. exzentrisch angeordnet) dienen. Bei der Auslegung des Profils kann weiterhin eine Optimierung dessen hinsichtlich des Fertigungsprozesses, der Bauteilbeständigkeit, einer Optimierung der Flächenpressung oder ähnliches durchgeführt werden. Ebenfalls ist eine Auslegung dahingehend denkbar, dass sich eine Variation des Kontaktpunktes während des Ankerhubs ergibt. Hierdurch könnte die Führung des Ankers optimiert werden.

Erfindungsgemäß ist weiterhin ein Werkzeug zur Herstellung eines Ventilelements für ein Magnetventil zur Steuerung des Bremsdrucks einer Radbremse einer schlupfregelbaren Hydraulikbremsanlage eines Kraftfahrzeugs vorgesehen, wobei das Ventilelement längsbeweglich zumindest teilweise in einem Ventileinsatz angeordnet werden und mit einem Ventilsitz zusammenwirken kann, und wobei das Ventilelement in Einbaulage von einer Federeinrichtung mit einer in Öffnungsrichtung bezüglich des Ventilsitzes wirkenden Kraftkomponente beaufschlagbar ist und mittels eines elektromagnetischen Aktuator in Schließrichtung bezüglich des Ventilsitzes betätigbar ist, und wobei das Ventilelement zwischen einem Anker und dem Ventilsitz angeordnet werden kann und an dem Ventilelement eine Kontaktfläche ausgebildet ist, an welcher das Ventilelement mit dem Anker in Wirkverbindung steht, dadurch gekennzeichnet, dass das Werkzeug als Spritzgussform ausgebildet ist, wobei die Spritzgussform eingerichtet ist die Kontaktfläche des mittels der Spritzgussform herzustellenden Ventilelements derart auszubilden, dass zwischen einer Mittelachse des Ventilelements und der Kontaktfläche ein nicht-rechtwinkliger Schnittwinkel besteht.

Hierunter wird ein Werkzeug verstanden, welches eingerichtet und ausgebildet ist, ein wie oben beschriebenes Ventilelement zu erzeugen. Der nicht-rechtwinklige Schnittwinkel zwischen der Mittelachse und der Kontaktfläche wird insbesondere auf das fertige Werkstück bezogen. Als Werkzeug kann bspw. eine Spritzgussform zur Herstellung des Ventilelements verstanden werden. Diese Spritzgussform kann bspw. Aussparungen zur Erzeugung der Vorsprünge der Stirnfläche des Ventilelements aufweisen.

Zusammenfassend lässt sich formulieren: Bei der Herstellung des Stößels treten aufgrund von Asymmetrien in der Faserorientierung Verzüge des Bauteils auf. Dies führt dazu, dass auch die Anlagefläche am hinteren Ende Stößels eine gewisse Schiefheit aufweist. Da dieser Verzug stets an die Faserorientierung gebunden ist, ist eine Kompensation des Effekts im Werkzeug möglich. Durch geeignete Gestaltung des Werkzeuges (bspw. unterschiedliche Höhe der 4 Kontaktpads) wird sichergestellt, dass nach dem Erkalten des Bauteils die Schiefheit der Anlagefläche (welche durch die 4 Pads gebildet wird) minimiert wird.

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

### Von den Figuren zeigt:

Fig. 1 eine schematische Schnittansicht eines herkömmlichen Magnetventils; und
Fig. 2 eine schematische Ursachen- und Wirkungskette hinsichtlich der Druckstellgenauigkeit und dem Ankerkippwinkel; und
Fig. 3a eine schematische Ansicht eines Ausführungsbeispiels eines Ventilelements mit ausgebildeten Kontaktstellen in Aufsicht; und
Fig. 3b eine schematische Ansicht eines Ausführungsbeispiels eines Ventilelements mit ausgebildeten Kontaktstellen in Seitenansicht; und
Fig. 4a, 4b, 4c jeweils eine schematische Ansicht eines Ausführungsbeispiels eines Ventilelement im Teilausschnitt.

In Fig. 1 ist eine schematische Schnittansicht eines herkömmlichen Magnetventils gezeigt. Dieses wurde bereits als Stand der Technik beschrieben.

Fig. 2 zeigt weiterhin schematisch eine Ursachen- und Wirkungskette. Hierbei werden in den Darstellungen links oben mögliche Ungenauigkeiten in den einzelnen Bauteilen dargestellt. Eine dieser Ungenauigkeiten ist der material- und herstellungsbedingte Verzug des Ventilelements. Solche Ungenauigkeiten können zu einem Verkippen, bzw. zu einer Schrägstellung des Ankers bspw. hinsichtlich dem Ventileinsatz führen. Dies ist in der Darstellung rechts oben gezeigt. Bei einem Einsatz des Ventils kann es weiterhin zu Drehungen des Ankers und/oder der Ventilelements kommen. Diese führen zu einer variierenden Schrägstellung des Ankers bspw. hinsichtlich dem Ventileinsatz. Variierende Schrägstellungen des Ankers verursachen jedoch eine variierende auf den Anker wirkende Magnetkraft. Dies ist in der Darstellung rechts unten gezeigt. Die variierende auf den Anker wirkende Magnetkraft führt wiederum zu einer unterschiedlichen Strom-/Druck-Charakteristik des Ventils, wie dies in der Darstellung unten links abgebildet ist. Ungenauigkeiten in den Komponenten verursachen damit unterschiedliche Leistungscharakteristiken bei unterschiedlichen Ventilen - vielmehr sogar werden damit unterschiedliche Charakteristiken bei ein und demselben Ventil während des Ventileinsatzes erzeugt.

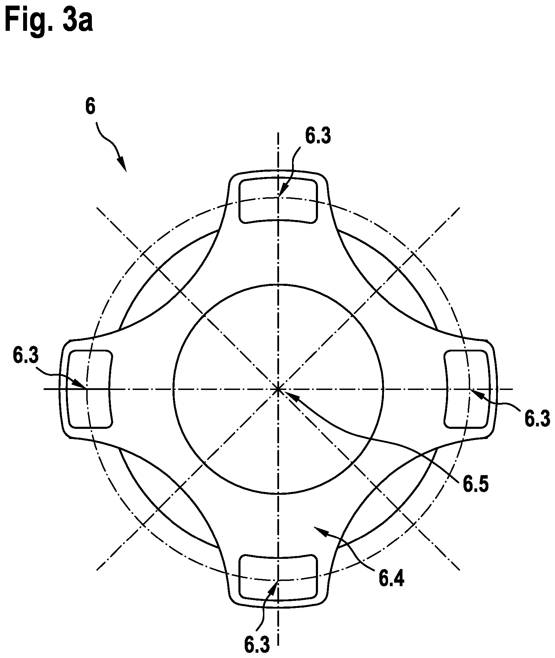

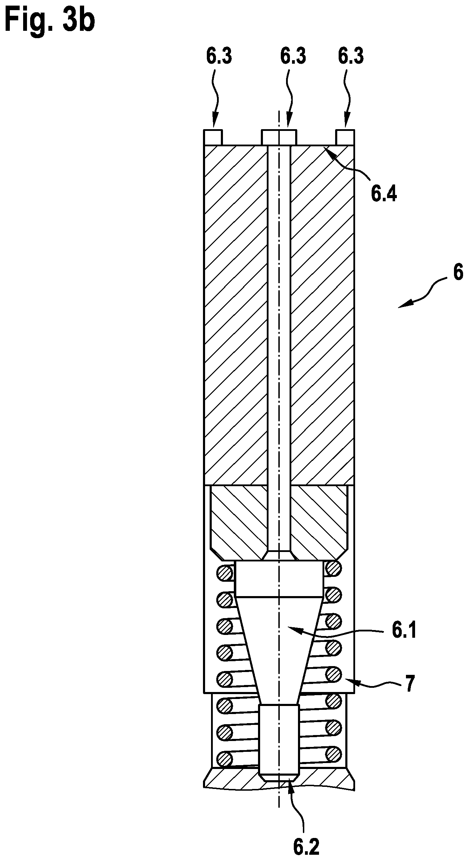

Fig. 3a und Fig. 3b zeigen Ausführungsformen der Erfindung. Hierbei zeigt Fig. 3a definierte Kontaktstellen 6.3 auf der Stirnseite des Ventilelements 6 in direkten Aufsicht. Die Kontaktstellen 6.3 sind auf der zum Anker 4 weisenden Stirnseite 6.4 des Ventilelements 6 definiert und ausgebildet. Hierbei ist auf jedem Flügel des Ventilelements 6 jeweils eine Kontaktstelle 6.3 ausgebildet. Die Kontaktstellen 6.3 sind am äußeren Rand der Stirnseite 6.4 positioniert, jedoch leicht von der Außenkante abgesetzt. Die Kontaktstellen 6.3 sind in Umfangsrichtung länger als in radialer Richtung. Die radialen Kanten der Kontaktstellen 6.3 sind auf die Mittelachse 6.5 des Ventilelements 6 ausgerichtet.

Fig. 3b zeigt das Ausführungsbeispiel in einer Seitenansicht. Hierbei ist ebenfalls das Ventilelement 6 dargestellt. Man sieht dabei deutlich, dass die ausgebildeten Kontaktstellen 6.3 auf der dem Anker 4 zugewandten Stirnseite 6.4 des Ventilelements 6 angebracht sind und unterschiedliche Höhen aufweisen. Weiterhin ist auch die Beabstandung der Kontaktstellen 6.3 dargestellt. Die dargestellten Höhen der Kontaktstellen 6.3 dienen der verbesserten Erkennung. Weiterhin sind das Schließelement 6.1 sowie das Hauptdichtelement 6.2 und die Federeinrichtung 7 dargestellt.

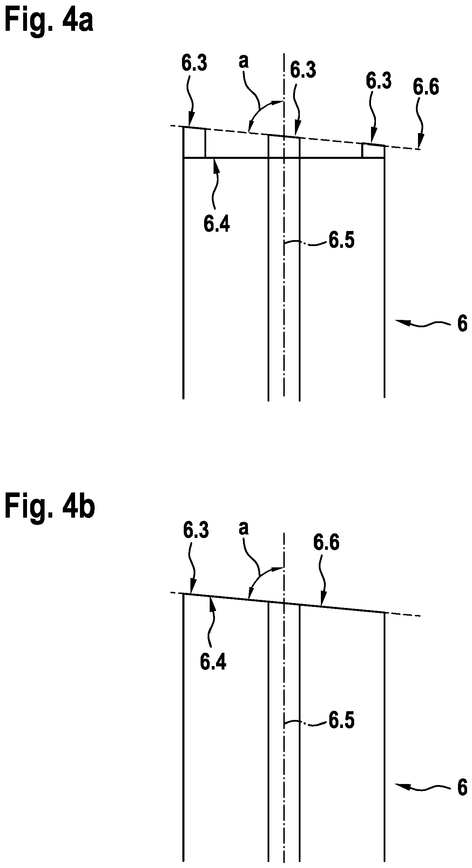

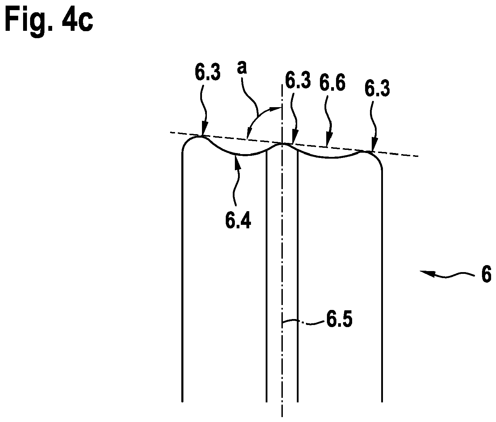

Fig. 4a, 4b und Fig. 4c zeigen Ausführungsformen der Erfindung, wobei lediglich der obere Bereich des Ventilelements 6 dargestellt ist. Weiterhin ist hier die Mittelachse 6.5 des Ventilelements 6 sowie die Kontaktfläche 6.6 eingezeichnet. Der Winkel a ist zwischen der Kontaktfläche 6.6 und der Mittelachse 6.5 des Ventilelements definiert. Fig. 4a zeigt ein Ausführungsbeispiel, bei dem vier Vorsprünge 6.3 die Kontaktfläche 6.6 definieren und darstellen (es sind jedoch lediglich drei Vorsprünge in der Abbildung zu sehen). In Fig. 4b ist ein Vorsprung 6.3 eingezeichnet, welcher durch die schräggestellte Stirnseite 6.4 des Ventilelements gebildet wird. In Fig. 4c weist die Stirnfläche 6.4 ein Profil auf. Dieses Profil besitzt mehrere Vorsprünge 6.3, welche als Anlagestellen für den Anker dienen und damit die Kontaktfläche 6.6. bilden.

## Patentansprüche

1. Magnetventil (1) zur Steuerung eines Bremsdrucks einer Radbremse einer schlupfregelbaren Hydraulikbremsanlage eines Kraftfahrzeugs, mit einem längsbeweglich zumindest teilweise in einem Ventileinsatz (8) angeordneten und mit einem Ventilsitz (9.1) zusammenwirkenden Ventilelement (6), das in Einbaulage von einer Federeinrichtung (7) mit einer in Öffnungsrichtung bzgl. des Ventilsitzes (9.1) wirkenden Kraftkomponente beaufschlagt wird und mittels eines elektromagnetischen Aktuator (3) in Schließrichtung bzgl. des Ventilsitzes (9.1) betätigbar ist, wobei das Ventilelementes (6) zwischen einem Anker (4) und dem Ventilsitz (9.1) angeordnet ist und an dem Ventilelement (6) eine Kontaktfläche (6.6) ausgebildet ist, an welcher das Ventilelement (6) mit dem Anker (4) in Wirkverbindung steht, **dadurch gekennzeichnet, dass** die die Kontaktfläche (6.6) derart ausgebildet ist, dass zwischen einer Mittelachse (6.5) des Ventilelements (6) und der Kontaktfläche (6.6) ein nicht-rechtwinkliger Schnittwinkel (a) besteht.

2. Magnetventil (1) nach Anspruch 1, **dadurch gekennzeichnet, dass** an der Stirnseite (6.4) des Ventilelements (6) wenigstens ein Vorsprung (6.3), insbesondere mehrere Vorsprünge (6.3), ausgebildet ist, welcher die Kontaktfläche (6.6) definiert.

3. Magnetventil (1) nach einem der vorhergehenden Ansprüche, **dadurch gekennzeichnet, dass** die Kontaktfläche (6.6) einen definierten Schnittwinkel (a) zu der Mittelachse (6.5) des Ventilelements (6) aufweist.

4. Magnetventil (1) nach Anspruch 3 **dadurch gekennzeichnet, dass** der Schnittwinkel (a) so definiert ist, dass die Kontaktfläche (6.6) eine Bewegung des Ankers (4) in axialer Richtung ohne ein Verkippen des Ankers (4) ermöglicht.

5. Magnetventil nach einem der Ansprüche 3 oder 4, **dadurch gekennzeichnet, dass** der Schnittwinkel (a) so definiert ist, dass ein durch einen Produktionsprozess verursachter Verzug des Ventilelements (6) durch den Schnittwinkel (a) kompensiert wird.

6. Magnetventil (1) nach einem der Ansprüche 3 bis 5, **dadurch gekennzeichnet, dass** der Schnittwinkel (a) so definiert ist, dass in Einbaulage des Ventilelements (6) die Kontaktfläche (6.6)
- orthogonal zur Bewegungsrichtung des Ventilelements ist; und/oder
- orthogonal zu einer Mittelachse des Magnetventils ist

7. Magnetventil (1) nach einem der Ansprüche 2 bis 6, **dadurch gekennzeichnet, dass** die Höhe des Vorsprungs (6.3) derart dimensioniert ist, dass hierdurch der definierte Schnittwinkel (a) eingestellt wird.

8. Magnetventil (1) nach einem der vorhergehenden Ansprüche, **dadurch gekennzeichnet, dass** an der Stirnseite (6.4) des Ventilelements (6) wenigstens zwei Vorsprünge (6.3) mit gleicher Höhe ausgebildet sind.

9. Magnetventil (1) nach einem der vorhergehenden Ansprüche, **dadurch gekennzeichnet, dass** an der Stirnseite (6.4) des Ventilelements (6) wenigstens zwei Vorsprünge (6.3) mit unterschiedlicher Höhe ausgebildet sind.

10. Magnetventil (1) nach einem der vorhergehenden Ansprüche, **dadurch gekennzeichnet, dass** an der Stirnseite (6.4) des Ventilelements (6) drei Vorsprünge (6.3) oder vier Vorsprünge (6.3) ausgebildet sind.

11. Magnetventil (1) nach einem der vorhergehenden Ansprüche, **dadurch gekennzeichnet, dass** die Vorsprünge (6.3) ebene Flächen aufweisen, wobei die ebenen Flächen insbesondere die Kontaktfläche (6.6) darstellen, wobei die Kontaktfläche (6.6) insbesondere einen Schnittwinkel (a) zu der Mittelachse (6.5) des Ventilelements (6) aufweist.

12. Magnetventil (1) nach einem der vorhergehenden Ansprüche, **dadurch gekennzeichnet, dass** die Stirnseite (6.4) des Ventilelements (6) ein Profil aufweist, wobei insbesondere die Erhebungen des Profils die Kontaktfläche (6.6) definieren.

13. Werkzeug eingerichtet und ausgebildet zur Herstellung eines Ventilelements (6) für ein Magnetventil (1) zur Steuerung des Bremsdrucks einer Radbremse einer schlupfregelbaren Hydraulikbremsanlage eines Kraftfahrzeugs, wobei das Ventilelement (6) längsbeweglich zumindest teilweise in einem Ventileinsatz (8) angeordnet werden und mit einem Ventilsitz (9.1) zusammenwirken kann, und wobei das Ventilelement (6) in Einbaulage von einer Federeinrichtung (7) mit einer in Öffnungsrichtung bezüglich des Ventilsitzes (9.1) wirkenden Kraftkomponente beaufschlagbar ist und mittels eines elektromagnetischen Aktuator (3) in Schließrichtung bezüglich des Ventilsitzes (9.1) betätigbar ist, und wobei das Ventilelement (6) zwischen einem Anker (4) und dem Ventilsitz (9.1) angeordnet werden kann und an dem Ventilelement (6) eine Kontaktfläche (6.6) ausgebildet ist, an welcher das Ventilelement (6) mit dem Anker (4) in Wirkverbindung steht, **dadurch gekennzeichnet, dass** das Werkzeug als Spritzgussform ausgebildet ist, wobei die Spritzgussform eingerichtet ist die Kontaktfläche (6.6) des mittels der Spritzgussform herzustellenden Ventilelements (6) derart auszubilden, dass zwischen einer Mittelachse (6.5) des Ventilelements (6) und der Kontaktfläche (6.6) ein nicht-rechtwinkliger Schnittwinkel (a) besteht.

## Claims

1. Solenoid valve (1) for controlling a brake pressure of a wheel brake of a slip-controllable hydraulic brake system of a motor vehicle, having a valve element (6), which is arranged at least partly in a valve insert (8) in a longitudinally movable manner and interacts with a valve seat (9.1) and which, in the installed position, is acted upon by a spring device (7) with a force component acting in the opening direction with respect to the valve seat (9.1) and can be actuated in the closing direction with respect to the valve seat (9.1) by means of an electromagnetic actuator (3), wherein the valve element (6) is arranged between an armature (4) and the valve seat (9.1), and a contact surface (6.6), at which the valve element (6) is operatively connected to the armature (4), is formed on the valve element (6), **characterized in that** the contact surface (6.6) is designed in such a way that a non-right-angled intersection angle (a) is formed between a central axis (6.5) of the valve element (6) and the contact surface (6.6) .

2. Solenoid valve (1) according to Claim 1, **characterized in that** at least one projection (6.3), in particular a plurality of projections (6.3), is formed on the end (6.4) of the valve element (6), said projection or projections defining the contact surface (6.6).

3. Solenoid valve (1) according to one of the preceding claims, **characterized in that** the contact surface (6.6) has a defined intersection angle (a) relative to the central axis (6.5) of the valve element (6).

4. Solenoid valve (1) according to Claim 3, **characterized in that** the intersection angle (a) is defined in such a way that the contact surface (6.6) allows a movement of the armature (4) in the axial direction without tilting of the armature (4).

5. Solenoid valve according to either of Claims 3 or 4, **characterized in that** the intersection angle (a) is defined in such a way that a distortion of the valve element (6) caused by a production process is compensated by the intersection angle (a).

6. Solenoid valve (1) according to any of Claims 3 to 5, **characterized in that** the intersection angle (a) is defined in such a way that, in the installed position of the valve element (6), the contact surface (6.6)
- is orthogonal with respect to the direction of movement of the valve element; and/or
- is orthogonal with respect to a central axis of the solenoid valve.

7. Solenoid valve (1) according to any of Claims 2 to 6, **characterized in that** the height of the projection (6.3) is dimensioned in such a way that the defined intersection angle (a) is set thereby.

8. Solenoid valve (1) according to any of the preceding claims, **characterized in that** at least two projections (6.3) of the same height are formed on the end (6.4) of the valve element (6).

9. Solenoid valve (1) according to any of the preceding claims, **characterized in that** at least two projections (6.3) of different heights are formed on the end (6.4) of the valve element (6).

10. Solenoid valve (1) according to any of the preceding claims, **characterized in that** three projections (6.3) or four projections (6.3) are formed on the end (6.4) of the valve element (6).

11. Solenoid valve (1) according to any of the preceding claims, **characterized in that** the projections (6.3) have flat surfaces, wherein, in particular, the flat surfaces form the contact surface (6.6), wherein, in particular, the contact surface (6.6) has an intersection angle (a) relative to the central axis (6.5) of the valve element (6) .

12. Solenoid valve (1) according to any of the preceding claims, **characterized in that** the end (6.4) of the valve element (6) has a profile, wherein, in particular, the raised portions of the profile define the contact surface (6.6) .

13. Tool configured and designed for producing a valve element (6) for a solenoid valve (1) for controlling the brake pressure of a wheel brake of a slip-controllable hydraulic brake system of a motor vehicle, wherein the valve element (6) can be arranged at least partly in a valve insert (8) in a longitudinally movable manner and can interact with a valve seat (9.1), and wherein, in the installed position, the valve element (6) can be acted upon by a spring device (7) with a force component acting in the opening direction with respect to the valve seat (9.1) and can be actuated in the closing direction with respect to the valve seat (9.1) by means of an electromagnetic actuator (3), and wherein the valve element (6) can be arranged between an armature (4) and the valve seat (9.1), and a contact surface (6.6), at which the valve element (6) is operatively connected to the armature (4), is formed on the valve element (6), **characterized in that** the tool is designed as an injection mould, wherein the injection mould is configured to form the contact surface (6.6) of the valve element (6) to be produced by means of the injection mould in such a way that a non-right-angled intersection angle (a) is formed between a central axis (6.5) of the valve element (6) and the contact surface (6.6).

## Revendications

1. Soupape magnétique (1) pour la commande d'une pression de freinage d'un frein de roue d'une installation de freinage hydraulique à régulation du glissement d'un véhicule automobile, comprenant un élément de soupape (6) disposé de manière déplaçable longitudinalement au moins en partie dans un insert de soupape (8) et coopérant avec un siège de soupape (9.1), lequel est sollicité, dans la position d'installation, par un dispositif de ressort (7) avec une composante de force agissant dans la direction d'ouverture par rapport au siège de soupape (9.1) et peut être actionné au moyen d'un actionneur électromagnétique (3) dans la direction de fermeture par rapport au siège de soupape (9.1), l'élément de soupape (6) étant disposé entre un induit (4) et le siège de soupape (9.1) et une surface de contact (6.6) étant réalisée au niveau de l'élément de soupape (6), au niveau de laquelle l'élément de soupape (6) est en liaison fonctionnelle avec l'induit (4), **caractérisée en ce que** la surface de contact (6.6) est réalisée de telle sorte qu'entre un axe médian (6.5) de l'élément de soupape (6) et la surface de contact (6.6) est formé un angle d'intersection (a) non droit.

2. Soupape magnétique (1) selon la revendication 1, **caractérisée en ce qu'au** moins une saillie (6.3), en particulier plusieurs saillies (6.3), est réalisée au niveau du côté frontal (6.4) de l'élément de soupape (6), laquelle définit la surface de contact (6.6).

3. Soupape magnétique (1) selon l'une quelconque des revendications précédentes, **caractérisée en ce que** la surface de contact (6.6) présente un angle d'intersection défini (a) avec l'axe médian (6.5) de l'élément de soupape (6).

4. Soupape magnétique (1) selon la revendication 3, **caractérisée en ce que** l'angle d'intersection (a) est défini de telle sorte que la surface de contact (6.6) permette un déplacement de l'induit (4) dans la direction axiale sans basculement de l'induit (4) .

5. Soupape magnétique selon l'une quelconque des revendications 3 et 4, **caractérisée en ce que** l'angle d'intersection (a) est défini de telle sorte qu'un défaut de l'élément de soupape (6) provoqué par un processus de production est compensé par l'angle d'intersection (a).

6. Soupape magnétique (1) selon l'une quelconque des revendications 3 à 5, **caractérisée en ce que** l'angle d'intersection (a) est défini de telle sorte que dans la position d'installation de l'élément de soupape (6), la surface de contact (6.6) est
- perpendiculaire à la direction de déplacement de l'élément de soupape ; et/ou
- perpendiculaire à un axe médian de la soupape magnétique.

7. Soupape magnétique (1) selon l'une quelconque des revendications 2 à 6, **caractérisée en ce que** la hauteur de la saillie (6.3) est dimensionnée de telle sorte que l'angle d'intersection (a) défini soit ajusté.

8. Soupape magnétique (1) selon l'une quelconque des revendications précédentes, **caractérisée en ce qu'**au moins deux saillies (6.3) de même hauteur sont réalisées au niveau du côté frontal (6.4) de l'élément de soupape (6).

9. Soupape magnétique (1) selon l'une quelconque des revendications précédentes, **caractérisée en ce qu'**au moins deux saillies (6.3) de hauteurs différentes sont réalisées au niveau du côté frontal (6.4) de l'élément de soupape (6).

10. Soupape magnétique (1) selon l'une quelconque des revendications précédentes, **caractérisée en ce que** trois saillies (6.3) ou quatre saillies (6.3) sont réalisées au niveau du côté frontal (6.4) de l'élément de soupape (6).

11. Soupape magnétique (1) selon l'une quelconque des revendications précédentes, **caractérisée en ce que** les saillies (6.3) présentent des surfaces planes, les surfaces planes constituant notamment la surface de contact (6.6), la surface de contact (6.6) présentant notamment un angle d'intersection (a) avec l'axe médian (6.5) de l'élément de soupape (6).

12. Soupape magnétique (1) selon l'une quelconque des revendications précédentes, **caractérisée en ce que** le côté frontal (6.4) de l'élément de soupape (6) présente un profil, les rehaussements du profil définissant notamment la surface de contact (6.6).

13. Outil prévu et réalisé pour fabriquer un élément de soupape (6) pour une soupape magnétique (1) pour la commande d'une pression de freinage d'un frein de roue d'une installation de freinage hydraulique à régulation du glissement d'un véhicule automobile, l'élément de soupape (6) pouvant être disposé de manière déplaçable longitudinalement au moins en partie dans un insert de soupape (8) et pouvant coopérer avec un siège de soupape (9.1), et l'élément de soupape (6) pouvant être sollicité, dans la position d'installation, par un dispositif de ressort (7) avec une composante de force agissant dans la direction d'ouverture par rapport au siège de soupape (9.1) et pouvant être actionné au moyen d'un actionneur électromagnétique (3) dans la direction de fermeture par rapport au siège de soupape (9.1), et l'élément de soupape (6) pouvant être disposé entre un induit (4) et le siège de soupape (9.1), et une surface de contact (6.6) étant réalisée au niveau de l'élément de soupape (6), au niveau de laquelle l'élément de soupape (6) est en liaison fonctionnelle avec l'induit (4), **caractérisé en ce que** l'outil est réalisé sous forme de moule d'injection, le moule d'injection étant prévu pour réaliser la surface de contact (6.6) de l'élément de soupape (6) à fabriquer au moyen du moule d'injection, de telle sorte qu'entre un axe médian (6.5) de l'élément de soupape (6) et la surface de contact (6.6) soit formé un angle d'intersection (a) non droit.
